# EUROPÄISCHE PATENTSCHRIFT

(11) **EP 2 054 747 B1**
(45) Veröffentlichungstag und Bekanntmachung des Hinweises auf die Patenterteilung: **28.02.2018**
(21) Anmeldenummer: 08707391.2
(22) Anmeldetag: 30.01.2008
(51) Int. Cl.: G02B 6/44, H02G 15/013, H02G 15/076

(54) **KABELMUFFE**
CABLE JOINT
MANCHON DE CÂBLES

(30) Priorität: 14.02.2007 DE 202007002376 U
(43) Veröffentlichungstag der Anmeldung: 06.05.2009
(73) Patentinhaber: CCS Technology, Inc., Wilmington, DE 19803 (US)
(72) Erfinder: EICHSTÄDT, Andreas, 58675 Hemer (DE); SYPLACZ, Roman, 58099 Hagen (DE); MÜLLER, Thorsten, 58708 Menden (DE)
(74) Vertreter: Sturm, Christoph
(86) Internationale Anmeldenummer: PCT/EP2008/000690
(87) Internationale Veröffentlichungsnummer: WO 2008/098678

(56) Entgegenhaltungen:
- EP-A- 0 844 716
- WO-A-93/26069
- WO-A-97/04345
- WO-A-99/33154
- DD-A5- 298 334
- DE-U1-202006 006 019

## Beschreibung

Die Erfindung betrifft eine Kabelmuffe zur strukturierten Ablage bzw. Handhabung von in Lichtwellenleiterkabeln geführten Lichtwellenleitern gemäß dem Oberbegriff des Anspruchs 1.

Kabelmuffen zur strukturierten Ablage bzw. Handhabung von in Lichtwellenleiterkabeln geführten Lichtwellenleitem werden in Lichtwellenleiterkabelnetzen zum Schutz von Spleißverbindungen an Verbindungsstellen von zwei Lichtwellenleiterkabeln sowie zum Schutz der Lichtwellenleiter an Abzweigstellen oder an Aufteilungsstellen von Lichtwellenleiterkabeln verwendet. Dabei müssen die Kabelmuffen die Kontinuität der Lichtwellenleiterkabel so gewährleisten, als wären die Lichtwellenleiterkabel nicht unterbrochen. Der strukturierten Ablage und schonenden Handhabung der Lichtwellenleiter kommt hierbei eine wichtige Rolle zu, damit die Übertragungseigenschaften der Lichtwellenleiter nicht negativ beeinträchtigt werden.

Eine Kabelmuffe mit den Merkmalen des Oberbegriffs des Anspruchs 1 ist aus der EP 0 646 294 B1 bekannt. So umfasst die dort offenbarte Kabelmuffe einen Abdeckkörper sowie einen in eine Öffnung des Abdeckkörpers einführbaren Dichtungskörper. Der Dichtungskörper umfasst ein zwischen zwei formstabilen Platten angeordnetes, gelartiges Dichtungsmaterial. Nach der EP 0 646 294 B1 ist der Dichtungskörper in einem Hohlraum in Axialrichtung nach innen und außen in Bezug auf den Abdeckkörper verschiebbar, um Druckunterschiede zwischen einem Innendruck und Außendruck der Kabelmuffe auszugleichen. Abhängig von diesem Druckunterschied kommt der Dichtungskörper dabei an unterschiedlichen Anschlägen zur Anlage.

Aus der DE 20 2006 006 019.7 ist ein Dichtungskörper für eine Kabelmuffe bekannt, der ein mittleres, zylinderartiges Dichtungskörpersegment sowie mehrere zylindersegmentartige Dichtungskörpersegmente umfasst, wobei die zylindersegmentartigen Dichtungskörpersegmente in Ausnehmungen, die an einer Außenkontur des mittleren, zylinderartigen Dichtungskörpersegments ausgebildet sind, einsetzbar bzw. aus den Ausnehmungen entfernbar sind. In montiertem Zustand ist in jede Ausnehmung des mittleren, zylinderartigen Dichtungskörpersegments ein zylindersegmentartiges Dichtungskörpersegment eingesetzt, wobei dann die zylindersegmentartigen Dichtungskörpersegmente die Außenkontur des mittleren Dichtungskörpersegments unter Ausbildung einer zylinderartigen Außenkontur ergänzen. Die Außenkontur des Dichtungskörpers ist an eine Innenkontur einer Öffnung des Abdeckkörpers, in welche der Dichtungskörper einzuführen ist, angepasst.

Bei aus dem Stand der Technik bekannten Kabelmuffen wird ein Dichtbereich, der zwischen der Außenkontur des in den Abdeckkörper eingesetzten Dichtungskörpers und einer Innenkontur des Abdeckkörpers ausgebildet ist, mit Hilfe eines Dichtrings abgedichtet, der in eine Nut eingesetzt ist, wobei die Nut In die Außenkontur des Dichtungskörpers eingebracht ist. Ober einen Klemmring ist die Innenkontur des Abdeckkörpers gegen die Außenkontur des Dichtungskörpers im Bereich des Dichtrings drückbar. Hiermit ist bereits eine gute Abdichtung des Dichtbereichs zwischen der Außenkontur des Dichtungskörpers und der Innenkontur des Abdeckkörpers realisierbar. Insbesondere dann, wenn der Abdeckkörper jedoch einen fertigungsbedingten Verzug aufweist, bereitet die Abdichtung des Dichtbereichs zwischen der Außenkontur des Dichtungskörpers und der Innenkontur des Abdeckkörpers Schwierigkeiten.

Hiervon ausgehend liegt der vorliegenden Erfindung das Problem zu Grunde, eine neuartige Kabelmuffe zur strukturierten Ablage bzw. Handhabung von in Lichtwellenleiterkabeln geführten Lichtwellenleitern zu schaffen.

DD 298 334 A5 offenbart eine Kabelmuffe mit einem Abdeckkörper und einem Dichtkörper, wobei der Abdeckkörper eine Nut, in der ein Dichtring angeordnet ist, vollständig überdeckt, sodass auf den Dichtring nur eine Kraft in Radialrichtung ausgeübt werden kann.

Dieses Problem wird dadurch gelöst, dass die eingangs genannte Kabelmuffe zur strukturierten Ablage bzw. Handhabung von in Uchtwellenleiterkabeln geführten Lichtwellenleitem durch die Merkmale des kennzeichnenden Teils des Anspruchs 1 weitergebildet ist.

Bei der erfindungsgemäßen Kabelmuffe dient ein Vorsprung des Klemmrings dazu, den Dichtring, welcher der Abdichtung des Dichtbereichs zwischen der Außenkontur des Dichtungskörpers und der Innenkontur des Abdeckkörpers dient, definiert zu verformen, so dass der Dichtring einerseits gegen die Nut des Dichtungskörpers und damit die Außenkontur desselben und andererseits gegen die Innenkontur des Abdeckkörpers drückt. Hierdurch kann die Abdichtung des zwischen der Außenkontur des Dichtungskörpers und der Innenkontur des Abdeckkörpers ausgebildeten Dichtbereichs verbessert werden.

Nach einer vorteilhaften Weiterbildung der Erfindung weist der Dichtring eine Shore-Härte zwischen 30 und 50, insbesondere eine Shore-Härte von 40, auf.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. In der Zeichnung zeigt:
- Fig. 1:: eine als Haubenmuffe ausgebildete, erfindungsgemäße Kabelmuffe zur strukturierten Ablage bzw. Handhabung von in Lichtwellenleiterkabeln geführten Lichtwellenleitem im Querschnitt,
- Fig. 2:: ein vergrößertes Detail der Haubenmuffe gemäß Fig. 1, und
- Fig. 3:: das Detail der Fig. 2 in perspektivischer Ansicht.

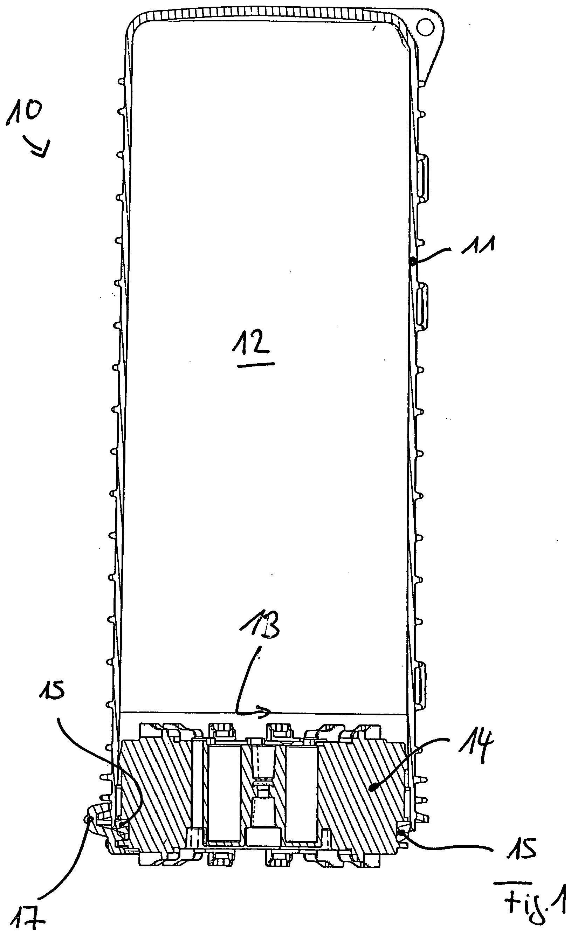

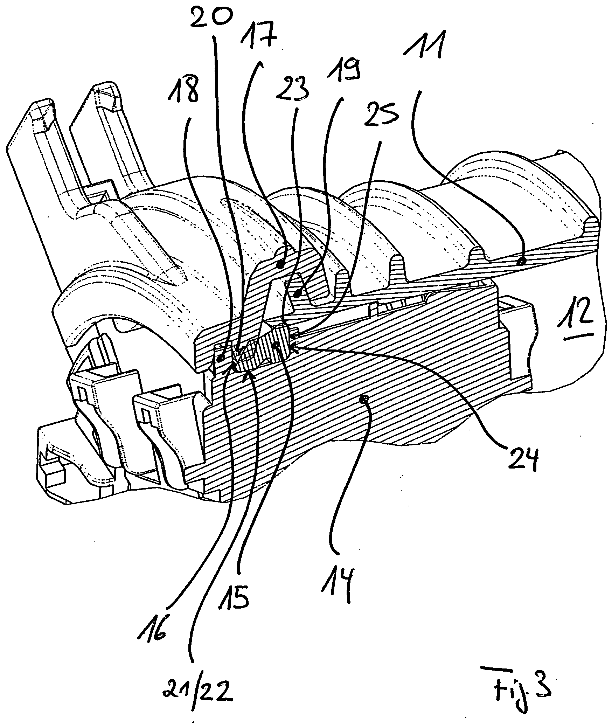

Unter Bezugnahme auf die Fig. 1 bis 3 wird nachfolgend die Erfindung anhand einer als Haubenmuffe ausgebildeten Kabelmuffe zur strukturierten Ablage bzw. Handhabung von in Lichtwellenleiterkabeln geführten Lichtwellenleitem im Detail beschrieben. Obwohl die Erfindung bei Haubenmuffen besonders vorteilhaft verwendet werden kann, ist die Erfindung auch bei anderen Muffentypen, zum Beispiel bei sogenannten Inline-Muffen, verwendbar.

Fig. 1 zeigt einen Querschnitt durch eine erfindungsgemäße Kabelmuffe 10, die als Haubenmuffe ausgebildet ist. Die Kabelmuffe 10 verfügt über einen als Abdeckhaube ausgebildeten Abdeckkörper 11, wobei der Abdeckkörper 11 einen Innenraum 12 der Kabelmuffe 10 begrenzt. Der Innenraum 12 der Kabelmuffe 10 dient insbesondere der Aufnahme von Spleißkassetten, um Lichtwellenleiter, die in Lichtwellenleiterkabeln geführt sind, handzuhaben. Neben dem Abdeckkörper 11 verfügt die Kabelmuffe 10 der Fig. 1 über einen in eine Öffnung 13 des Abdeckkörpers 11 eingeführten Dichtungskörper 14.

Der Dichtungskörper 14 definiert einen Einführungsbereich für Lichtwellenleiterkabel, um Lichtwellenleiterkabel von außen in den Innenraum 12 der Kabelmuffe 10 einzuführen und/oder um Lichtwellenleiterkabel aus dem Innenraum 12 heraus nach außen abzuführen.

Der Dichtungskörper 14 verfügt über eine zylinderartige Außenkontur, die an eine Innenkontur des Abdeckkörpers 11 im Bereich der Öffnung 13 angepasst ist. Zwischen der Außenkontur des Dichtkörpers 14 und der Innenkontur des Abdeckkörpers 11 ist ein Dichtbereich ausgebildet, der mit Hilfe eines Dichtrings 15 abgedichtet wird.

Der Dichtring 15 ist in eine an der Außenkontur des Dichtungskörpers 14 umlaufende Nut 16 des Dichtungskörpers 14 eingesetzt und liegt einerseits an der Außenkontur des Dichtungskörpers 14 und andererseits an der Innenkontur des Abdeckkörpers 11 an. Zur Abdichtung des Dichtbereichs zwischen der Außenkontur des Dichtungskörpers 14 und der Innenkontur des Abdeckkörpers 11 wirkt der Dichtring 15 mit einem Klemmring 17 zusammen, der einerseits einen Vorsprung 18 des Dichtungskörpers 14 und andererseits einen Vorsprung 19 des Abdeckkörpers 11 umschließt.

Im Sinne der hier vorliegenden Erfindung überdeckt der Abdeckkörper 11 in montiertem Zustand der Kabelmuffe 10 die Nut 16, die den Dichtring 15 aufnimmt, nur teilweise, so dass ein Vorsprung 20 des Klemmrings 17 am Dichtring 15 unter Verformung desselben anliegt, nämlich derart, dass der Dichtring 15 einerseits gegen die Nut 16 des Dichtungskörpers 14 und andererseits gegen die Innenkontur des Abdeckkörpers 11 drückt.

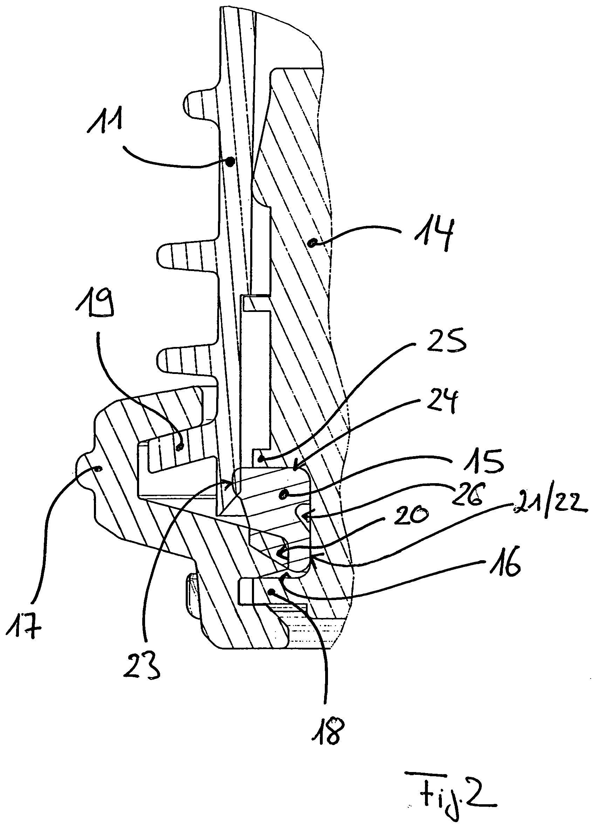

Wie insbesondere Fig. 2 entnommen werden kann, drückt der Vorsprung 20 des Klemmrings 17 den Dichtring 15 mit einem ersten Abschnitt 21 gegen einen Nutgrund 22 der Nut 16. Weiterhin drückt derselbe den Dichtring 15 mit einem zweiten Abschnitt 23 gegen die Innenkontur des Abdeckkörpers 11 sowie mit einem dritten Abschnitt 24 gegen eine in Einführrichtung des Dichtungskörpers 14 in den Abdeckkörper 11 gesehen vorne liegende Seitenwand 25 der Nut 16. Hierdurch wird eine optimale Abdichtung des Dichtbereichs zwischen der Außenkontur des Dichtkörpers 14 und der Innenkontur des Abdeckkörpers 11 bereitgestellt.

Die Verformung des Dichtrings 15 auf die oben beschriebene Art und Weise wird durch eine Einkerbung 26 unterstützt, die in eine Fläche des Dichtrings 15 eingebracht ist, mit welcher der Dichtring 15 am Nutgrund 22 der Nut 16 anliegt.

Der Dichtring 15 ist vorzugsweise aus Silikon gefertigt und verfügt über eine Shore-Härte zwischen 30 und 50, insbesondere über eine Shore-Härte von in etwa 40.

### Bezugszeichenliste

- 10: Kabelmuffe
- 11: Abdeckkörper
- 12: Innenraum
- 13: Öffnung
- 14: Dichtungskörper
- 15: Dichtring
- 16: Nut
- 17: Klemmring
- 18: Vorsprung
- 19: Vorsprung
- 20: Vorsprung
- 21: erster Abschnitt
- 22: Nutgrund
- 23: zweiter Abschnitt
- 24: dritter Abschnitt
- 25: Seitenwand
- 26: Einkerbung

## Patentansprüche

1. Kabelmuffe zur strukturierten Ablage bzw. Handhabung von in Lichtwellenleiterkabeln geführten Lichtwellenleitern, insbesondere Haubenmuffe, mit einem einen Innenraum (12) definierenden Abdeckkörper (11), insbesondere einer Abdeckhaube, mit mindestens einem in eine Öffnung (13) des Abdeckkörpers (11) einführbaren, der Einführung von Lichtwellenleiterkabeln in den Innenraum (12) und/oder der Ausführung von Lichtwellenleiterkabeln aus dem Innenraum (12) dienenden Dichtungskörper (14), wobei ein zwischen einer Außenkontur des Dichtungskörpers (14) und einer Innenkontur des Abdeckkörpers (11) ausgebildeter Dichtbereich durch einen Dichtring (15), der in einer in die Außenkontur des Dichtungskörpers (14) eingebrachten Nut (16) positioniert ist, abgedichtet ist, und mit einem Klemmring (17), der die Innenkontur des Abdeckkörpers (11) im Bereich der Öffnung (13) gegen die Außenkontur des Dichtungskörpers (14) drückt, **dadurch gekennzeichnet, dass** der Abdeckkörper (11) die Nut (16) nur teilweise überdeckt, sodass ein Vorsprung (20) des Klemmrings (17) in die Nut (16) eingreift und am Dichtring (15) unter Verformung desselben derart anliegt, dass der Vorsprung (20) des Klemmrings (17) den Dichtring (15) mit einem ersten Abschnitt (21) gegen die Nut (16) des Dichtungskörpers (14), mit einem zweiten Abschnitt (23) gegen die Innenkontur des Abdeckkörpers (11) und mit einem dritten Abschnitt (24) gegen eine Seitenwand (25) der Nut (16) drückt.

2. Kabelmuffe nach Anspruch 1, **dadurch gekennzeichnet, dass** der Dichtring (15) mit dem ersten Abschnitt (21) gegen einen Nutgrund (22) der Nut (16) des Dichtungskörpers (14) drückt.

3. Kabelmuffe nach Anspruch 2, **dadurch gekennzeichnet, dass** der Dichtring (15) an einer an dem Nutgrund (16) anliegenden Fläche eine Einkerbung (26) aufweist.

4. Kabelmuffe nach einem oder mehreren der Ansprüche 1 bis 3, **dadurch gekennzeichnet, dass** der Dichtring (15) mit dem dritten Abschnitt (24) gegen die in Einführrichtung gesehen vorne liegende Seitenwand (25) der Nut (16) drückt.

5. Kabelmuffe nach einem oder mehreren der Ansprüche 1 bis 4, **dadurch gekennzeichnet, dass** der Dichtring (15) aus Silikon gefertigt ist.

6. Kabelmuffe nach einem oder mehreren der Ansprüche 1 bis 5, **dadurch gekennzeichnet, dass** der Dichtring (15) eine Shore-Härte zwischen 30 und 50, insbesondere eine Shore-Härte von 40, aufweist.

## Claims

1. Cable sleeve for structured storage and handling of optical waveguides which are routed in optical waveguide cables, in particular shroud sleeve, having a covering body (11) which defines an interior space (12), in particular a covering shroud, having at least one sealing body (14) which can be inserted into an opening (13) of the covering body (11) and serves for routing optical waveguide cables into the interior space (12) and/or for routing optical waveguide cables out of the interior space (12), wherein a sealing region which is formed between an outer contour of the sealing body (14) and an inner contour of the covering body (11) is sealed off by a sealing ring (15) which is positioned in a groove (16) which is made in the outer contour of the sealing body (14), and having a clamping ring (17) which presses the inner contour of the covering body (11) in the region of the opening (13) against the outer contour of the sealing body (14), **characterized in that** the covering body (11) only partially covers the groove (16), so that a projection (20) of the clamping ring (17) engages into the groove (16) and bears against the sealing ring (15), with deformation of the said sealing ring, in such a way that the projection (20) of the clamping ring (17) presses the sealing ring (15) against the groove (16) of the sealing body (14) by way of a first section (21), against the inner contour of the covering body (11) by way of a second section (23) and against a side wall (25) of the groove (16) by way of a third section (24).

2. Cable sleeve according to Claim 1, **characterized in that** the sealing ring (15) presses against a groove base (22) of the groove (16) of the sealing body (14) by way of the first section (21).

3. Cable sleeve according to Claim 2, **characterized in that** the sealing ring (15) has a notch (26) on a surface which bears against the groove base (16).

4. Cable sleeve according to one or more of Claims 1 to 3, **characterized in that** the sealing ring (15) presses against the side wall (25) of the groove (16), which side wall is situated at the front as seen in the insertion direction, by way of the third section (24).

5. Cable sleeve according to one or more of Claims 1 to 4, **characterized in that** the sealing ring (15) is manufactured from silicone.

6. Cable sleeve according to one or more of Claims 1 to 5, **characterized in that** the sealing ring (15) has a Shore hardness of between 30 and 50, in particular a Shore hardness of 40.

## Revendications

1. Manchon de câbles destiné à recevoir de manière structurée ou permettant la manipulation de guides d'ondes optiques qui cheminent dans des câbles de guides d'ondes optiques, en particulier un manchon en calotte, comportant un corps de recouvrement (11) définissant une cavité (12), en particulier une calotte de recouvrement, comportant au moins un corps d'étanchéité (14) qui peut être introduit dans une ouverture (13) du corps de recouvrement (11) et sert à l'introduction de câbles de guides d'ondes optiques dans la cavité (12) et/ou à l'extraction du câble de guides d'ondes optiques de la cavité (12), dans lequel une zone d'étanchéité formée entre un contour extérieur du corps d'étanchéité et un contour intérieur du corps de recouvrement (11) est rendue étanche par une bague d'étanchéité (15) qui est positionnée dans une encoche (16) ménagée dans le contour extérieur du corps d'étanchéité (14), et comportant une bague de serrage (17) qui comprime le contour intérieur du corps de recouvrement (11) dans la zone de l'ouverture (13) contre le contour extérieur du corps d'étanchéité (14), **caractérisé en ce que** le corps de recouvrement (11) ne recouvre que partiellement l'encoche (16) de manière à ce qu'une partie en saillie (20) de la bague de serrage (17) s'engage dans l'encoche (16) et repose sur la bague d'étanchéité (15) en se déformant de manière à ce que la partie en saillie (20) de la bague de serrage (17) comprime la bague d'étanchéité (15) par une première section (21) contre l'encoche (16) du corps d'étanchéité (14), par une deuxième section (23), contre le contour intérieur du corps de recouvrement (11) et par une troisième section (24), contre une paroi latérale (25) de l'encoche (16).

2. Manchon de câbles selon la revendication 1, **caractérisé en ce que** la bague d'étanchéité (15) appuie par la première section (21) contre un fond d'encoche (22) de l'encoche (16) du corps d'étanchéité (14).

3. Manchon de câbles selon la revendication 2, **caractérisé en ce que** la bague d'étanchéité (15) présente une entaille (26) sur une surface adjacente au fond d'encoche (16).

4. Manchon de câbles selon l'une ou plusieurs des revendications 1 à 3, **caractérisé en ce que** la bague d'étanchéité (15) appuie par la troisième section (24) contre la paroi latérale (25) de l'encoche (16) qui est située vers l'avant lorsqu'on l'observe dans la direction d'insertion.

5. Manchon de câbles selon l'une ou plusieurs des revendications 1 à 4, **caractérisé en ce que** la bague d'étanchéité (15) est constituée de silicone.

6. Manchon de câbles selon l'une ou plusieurs des revendications 1 à 5, **caractérisé en ce que** la bague d'étanchéité (15) présente une dureté Shore comprise entre 30 et 50, et en particulier, une dureté Shore de 40.
